## Europäisches Patentamt

## European Patent Office

## Office européen des brevets

(19)

(11) Veröffentlichungsnummer: **0 062 154**
**B1**

(12)
# EUROPÄISCHE PATENTSCHRIFT

(45) Veröffentlichungstag der Patentschrift:
18.05.88

(21) Anmeldenummer: 82101219.2

(22) Anmeldetag: 18.02.82

(51) Int. Cl.⁴: **F 16 F 7/10,** E 04 B 1/98,
**H 02 G 7/14**

(54) Stoss-Schwingungstilger zur Tilgung tieffrequenter Transversalschwingungen.

(30) Priorität: 07.04.81 DE 3113969

(43) Veröffentlichungstag der Anmeldung:
13.10.82 Patentblatt 82/41

(45) Bekanntmachung des Hinweises auf die Patenterteilung:
18.05.88 Patentblatt 88/20

(84) Benannte Vertragsstaaten:
AT BE CH DE FR GB IT LI NL SE

(56) Entgegenhaltungen:
DE-A-2 834 235
DE-C-620 702
FR-A-795 655
GB-A-2 046 531
US-A-1 995 190
US-A-2 404 358
US-A-3 259 212
US-A-3 780 207

(73) Patentinhaber: **RICHARD BERGNER GMBH & CO,**
**Bahnhofstrasse 8-16, D-8540 Schwabach (DE)**

(72) Erfinder: **Meier- Dörnberg, K. E., Dr.- Ing.,**
**Schillerstrasse 19, D-6101 Rossdorf 1 (DE)**

(74) Vertreter: **Tergau, Enno, Tergau & Pohl**
**Patentanwälte Hefnersplatz 3 Postfach 9347,**
**D-8500 Nürnberg 11 (DE)**

## Beschreibung

Die Erfindung betrifft einen Stoß-Schwingungstilger zum Tilgen tieffrequenter Transversal-Schwingungen schlanker Strukturen, insbesondere Hochspannungsfreileitungen, mit den im Oberbegriff des Anspruches 1 angegebenen Merkmalen.

Ein derartige Tilgerausführung ist bekannt aus der US-A-3 295 212, die einen Stoß-Schwingungstilger zum Dämpfen von Mastschwingungen beschreibt. In einem Ausführungsbeispiel gemäß dieser Druckschrift ist eine Tilgermasse in einem Gehäuse schwingfähig gelagert. Deren Schwingweg ist durch harte Anschläge begrenzt. Durch zwei Federn wird die Tilgermasse in einer Ausgangsposition etwa mittig zwischen den Anschlägen gehalten. Bei Vibrationen der zu bedämpfenden Struktur wird die Tilgermasse in Schwingungen versetzt, wobei sie auf die Anschläge hart auftrifft. Durch die damit erzeugten Stöße auf diese dämpfende Struktur findet eine Energiedissipation statt, wodurch die Schwingungen schnell getilgt werden.

Nachteilig beim Stoß-Schwingungstilger nach US-A-3 295 212 ist die Tatsache, daß er konstruktionsbedingt bei vertikaler Anordnung nur in einem höheren Frequenzbereich oberhalb etwa 2 Hz eine zufriedenstellende Tilgung von Schwingungen erzielt. Darüber hinaus ist zur Lagerung der Tilgermasse im zylindrischen Gehäuse eine relativ aufwendige Kugellagerung verwendet.

Ferner sind allgemein Konstruktionen bekannt, bei denen die Dämpfung der Schwingungen gegen Festpunkte oder gegen Zusatzmassen durch Reibungsdämpfer, hydraulische Stoßdämpfer oder Materialdämpfung erfolgt.

So ist in der DE-Patentanmeldung P 30 44 093.8 als Tanztilger für Freileitungen ein horizontal angeordneter, langgestreckter Hohlkörper vorgeschlagen worden, der teilweise mit Flüssigkeit und/oder Schüttgut gefüllt ist. Hierbei erfolgt die Energieumwandlung durch Reibung in der bei Kippschwingungen hin- und herfließenden Masse.

Auf einem anderen Prinzip beruhen die sogenannten Schwingungsstörer, wie sie beispielsweise unter der Bezeichnung Elgra-Dämpfer bekanntgeworden sind. Hierbei sind Einzelmassen lose in einem an dem zu dämpfenden Seil befestigten Hänger eingelegt. Bei Vertikalschwingungen, deren Beschleunigungsamplituden die Fallbeschleunigung überschreiten, heben die Einzelmassen ab und schlagen bei Bewegungsumkehr am Hängerfuß auf (RIBE-Mitteilungen, Nr. 6, 1965, Seite 22, Bild 15).

Ähnlich arbeiten die sogenannten Schwinghebeldämpfer. Hier ist ein Balken etwas außerhalb seines Schwerpunktes drehbar am Seil angehängt und schlägt bei schwingendem Seil abwechselnd gegen eine obere bzw. untere Ausschlagbegrenzung an. Dabei wird

Schwingungsenergie in Schlagarbeit umgesetzt.

Der Schwingungstilger gemäß der DE-A-2 834 235 soll auch gegen niederfrequente Schwingungen im Bereich zwischen etwa 0,1 und 1 Hz wirksam sein. Hierzu ist jeweils ein Paar Massekörper mittels einer Feder im Freien, also außerhalb eines Gehäuses, schwingbar angeordnet. Es erscheint jedoch zweckmäßig, das gesamte Schwingungssystem innerhalb eines Gehäuses unterzubringen.

Generell sind bei solchen Vorrichtungen die Tilgermassen nicht gekapselt und darum Witterungseinflüssen, z. B. Eisbildung, ausgesetzt. Andere vergleichbare Einrichtungen sind erst bei hohen Schwingfrequenzen bzw. großen Beschleunigungsamplituden wirksam (RIBE-Mitteilung, Nr. 6, 1965, Bild 15 der Firma Richard Bergner und deren Katalog "Hochspannungs-Armaturen", Teil VI "Schwingungs-Schutzarmaturen", Seite 18, Bild 8).

Aus der DE-A-2 806 757 ist weiter ein Tilger zur Abwehr horizontaler, tieffrequenter Bauwerksschwingungen bekannt. Er besteht aus einer am Bauwerk pendelnd aufgehängten Zusatzmasse, die mit horizontal wirkenden Feder-Dämpfer-Elementen am Bauwerk angekoppelt ist.

Ähnlich ist der aus der DE-A-2 718 962 bekannte Tilger aufgebaut, dessen Masse auf einer waagerechten Plattform verschiebbar gelagert und über ein Hebelsystem mit hydraulischen Dämpfern am Bauwerk angekoppelt ist

Die Wirksamkeit dieser beiden speziell für hohe Gebäude bestimmten Vorrichtungen ist auf horizontale Gebäudeschwingungen und einen schmalen, auf eine Gebäudeeigenfrequenz abgestimmten Frequenzbereich beschränkt.

Demgegenüber ist es Aufgabe der Erfindung, einen witterungsunabhängigen, kompakten Schwingungstilger für sehr niedrige Frequenzbereiche von 0,1 bis 1 Hz anzugeben, der durch Stoßwirkung eine frühzeitige Störung von z. B. durch Wind angefachten vertikalen Schwingungsformen in schlanken Strukturen, wie z. B. Seiltanzen von Hochspannungsfreileitungen, bewirkt und dabei keine genaue Abstimmung auf die Struktureigenfrequenz erfordert.

Durch die erfindungsgemäße, in den kennzeichnenden Merkmalen des Anspruches 1 angegebene Lösung wird in vorteilhafter Weise die Energie von tieffrequenten Schwingungen der zu schützenden Struktur über Stoßverluste gedämpft, wobei die in der gestoßenen Struktur sich ausbreitenden hochfrequenten Stoßwellen eine Energiedissipation bewirken und die Stoßimpulse die angefachten tieffrequenten Schwingungsformen der Struktur bereits im Entstehen stören. Durch die Ausbildung der Tilgermasse als mindestens ein in vertikaler Richtung geführter abwälzbarer Rollkörper, der durch eine Biegefeder gehalten ist, wird eine besonders kompakte Bauform des Schwingungstilgers erzielt, da die Federn quasi keinen zusätzlichen Platz beanspruchen.

Den Ausführungen gemäß den Patentansprüchen ist gemeinsam, daß in einem Gehäuse eine Tilgermasse über Biegefedern und Führungen schwingungsfähig gelagert ist, wobei die Federn im wesentlichen nur die Kompensation des Tilgergewichtes bewirken, aber keine nennenswerte Schwingungsdämpfung der Tilgermasse bei deren Auslenkung bewirkt. Die Relativbewegung zwischen Masse und Gehäuse ist nur durch harte Stoßpuffer begrenzt.

Die in den Unteransprüchen angegebenen vorteilhaften Ausführungen sind insbesondere auf die Tilgung von Vertikalschwingungen ausgerichtet. Hiermit lassen sich tieffrequente Schwingungen in vertikaler Richtung bei einfacher und kompakter Bauweise besser tilgen Weitere Vorteile und Konstruktionsmerkmale der Weiterbildungen des Erfindungsgegenstandes sind der folgenden Beschreibung der Ausführungsbeispiele entnehmbar. Diese werden nachstehend anhand der schematischen Zeichnungen näher erläutert. In diesen zeigen:

Fig. 1 einen Schwingungstilger mit einer über eine vorgekrümmte Blattfeder im Gleichgewicht gehaltenen, als Rollkörper gestalteten Tilgermasse, als Mittel-Höhenschnitt entlang der Geraden I-I nach Fig. 2,

Fig. 2 den Schwingungstilger gemäß Fig. 1, jedoch als Schnitt entlang der Geraden II-II nach Fig. 1,

Fig. 3 einen Schwingungstilger mit mehreren gegenläufig geführten, aufgeteilten Tilgermassen, als Mittel-Höhenschnitt entlang der Geraden III-III nach Fig. 4 und

Fig. 4 den Schwingungstilger gemäß Fig. 3, jedoch im Schnitt entlang der Geraden IV-IV nach Fig. 3.

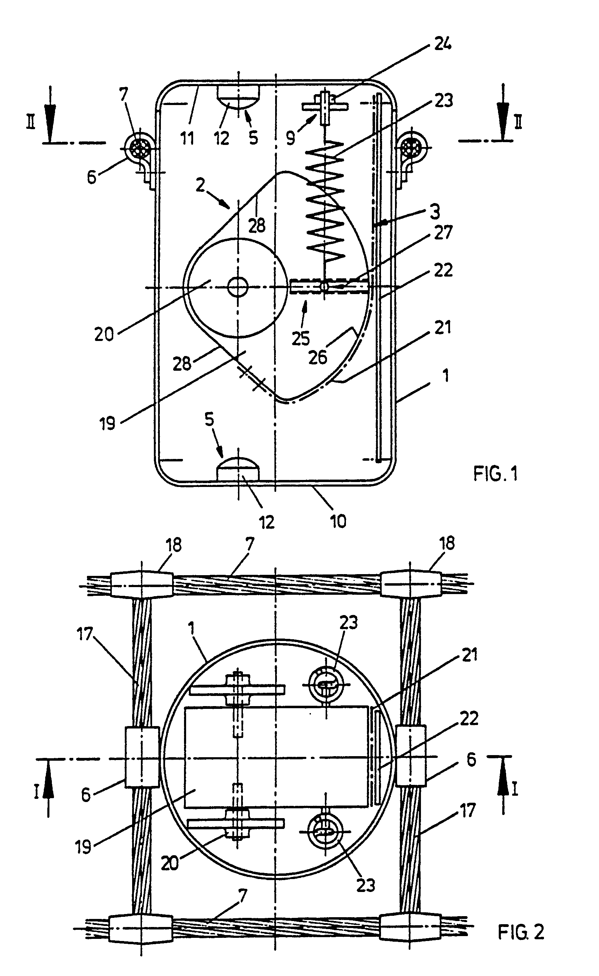

Den in den Fig. 1-4 dargestellten Ausführungsbeispielen der Erfindung ist gemeinsam, daß in einem zylindrischen Gehäuse 1 mindestens eine Tilgermasse 2 über Federn 3 und Führungen schwingfähig gehalten ist und daß die Relativbewegung zwischen der Tilgermasse 2 und dem Gehäuse 1 durch harte Anschläge 5 in ihrem Weg begrenzt ist.

Das Gehäuse 1 ist ein mit seiner Mittellängsachse vertikal angeordnetes Rohr, das mit üblichen Klemmen 6 unter Zwischenschaltung von federnden Brücken an der zu beruhigenden Struktur 7 - hier an einer Freileitung - befestigt ist. Als federnde Brücken eignen sich z. B. Drahtseile 17. Das Gehäuserohr ist an beiden Enden durch je einen Deckel 10, 11 verschlossen. Einer der beiden Deckel trägt das ungedämpft vertikal schwingfähige System.

Diese beiden Ausführungsbeispiele zeichnen sich durch besonders kompakte Bauweise aus.

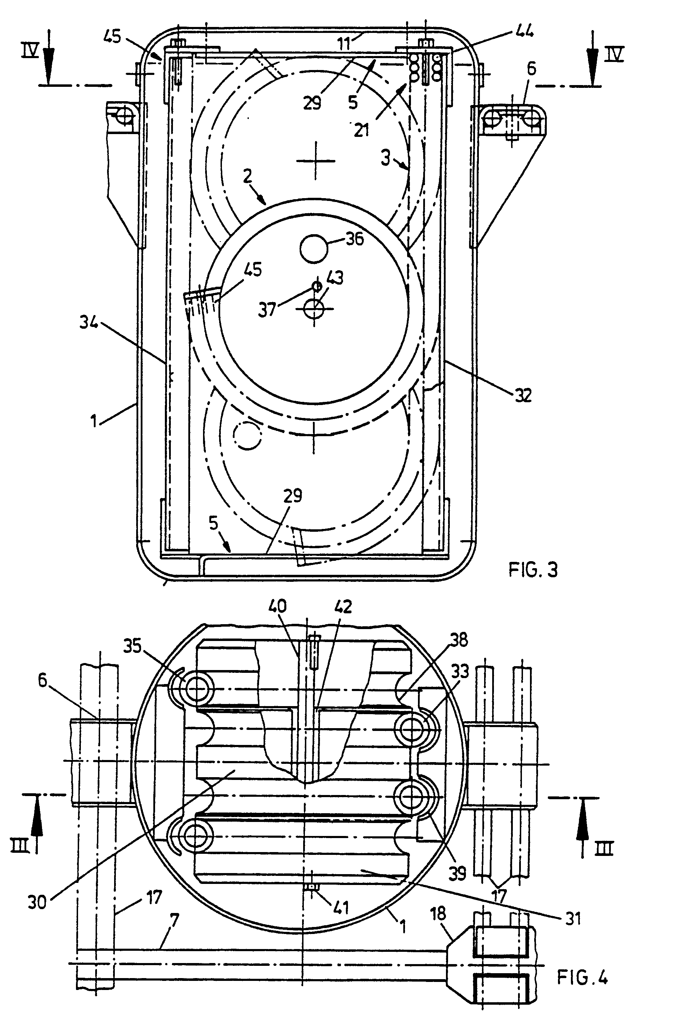

Bei dem Beispiel gemäß Fig. 1 und 2 ist die Tilgermasse 2 als Rollkörper 19 gestaltet, der sich mit Stützrollen 20 am Gehäuse 1 abstützt. Die Stützrollen 20 können zweckmäßigerweise auch an hier nicht dargestellten Schienen abrollen. Der Rollkörper 19 ist durch eine vorgekrümmte Biegefeder, hier eine Blattfeder 21, in Mittellage im statischen Gleichgewicht gehalten. Bei Schwingbewegungen der Tilgermasse rollt die Blattfeder auf der Kontur 26 des Rollkörpers 19 ab. Die Biegefeder ist zwar hier als Blattfeder 21 dargestellt; gleichgut sind jedoch auch andere Federformen geeignet, wie sie beim Beispiel gemäß Fig. 3 und 4 erläutert werden.

Die Blattfeder ist am oberen Ende einer vertikalen Federauflage 22 befestigt. Beim Abrollen des Rollkörpers 19 wird die Blattfeder aufgebogen und legt sich an diese Federauflage 22 an.

Zur Justierung der Mittellage des Rollkörpers 19 bzw. zur Veränderung der Tilgercharakteristik können hier als Schraubenfeder dargestellte Zusatzfedern 23 mit Spannvorrichtungen 24 und Abstandsverstellungen 25, 27 dienen.

Gemäß Fig. 1 ist die Kontur 26 des Rollkörpers 19 nur soweit als Rollkreis ausgebildet, als dies der Abrollweg erfordert. Die Seitenkonturen 28 werden zweckmäßig so gewählt, daß der Schwerpunkt des Rollkörpers exzentrisch zum Krümmungsradius des Rollkreises liegt. Durch diese exzentrische Schwerpunktlage wird erreicht, daß der Rollkörper 19 bestrebt ist, in die Mittellage einzupendeln. Der Effekt der Schwerpunktexzentrizität ist also gleich dem Effekt der Zusatzfedern 23.

Die an den Gehäusedeckeln 10, 11 angebrachten harten Anschläge 5 sind als Puffer 12 ausgebildet, deren Bauhöhe zum Einhalten der zweckmäßigen Schwingweite dient.

Das Gehäuse 1 zum Tilger gemäß den Fig. 3 und 4 entspricht dem Gehäuse des im Zusammenhang mit den Fig. 1 und 2 beschriebenen Tilgers. Die oberen und unteren harten Anschläge 5 sind hier jedoch als Platten 29 gestaltet, deren Höhenlage ebenfalls zum Festlegen der Schwingweite der Tilgermassen 2 dient.

Im Unterschied zu dem vorstehend beschriebenen Beispiel ist hier jedoch die Tilgermasse 2 aufgeteilt. Sie besteht aus drei als Rollkörper 30, 31 gestaltete Tilgermassen mit gemeinsamer Achse, wobei die Masse des mittleren Rollkörpers 30 doppelt so groß ist wie die Masse eines der beiden seitlichen Rollkörper 31. Aus Fertigungsgründen könnte es auch zweckmäßig sein, vier gleichgroße Massen einzubauen. Wesentlich für dieses Beispiel ist es, daß die Rollkörper 30 bzw. 31 gegensinnig abrollen.

Hieraus ergibt sich der Vorteil, daß die Federauflagen für die Schraubenfedern zugleich als Rollbahnen für die scheibenförmig gestalteten Rollkörper dienen.

Auch bei diesen Rollkörpern 30, 31 liegt der Schwerpunkt 37 zweckmäßigerweise dadurch exzentrisch, daß Bohrungen 36 angebracht sind. Durch diese Schwerpunktexzentrizität werden Rückstellung und Frequenzabstimmung erzielt.

Als Biegefedern sind hier vorgekrümmte Schraubenfedern 33, 35 eingebaut, die sich bei Schwingbewegungen um die Rollkörper 30, 31 einrollen bzw. von diesen abrollen. Hierzu sind sowohl die Rollkörper als auch die entsprechenden Federauflagen 32, 34 in Rillen 38, 39 ausgekehlt.

Die oberen Enden der Schraubenfedern 33, 35 sind über an sich bekannte Federbefestigungen 44 mit einem Gehäuseteil, etwa mit den Platten 29 oder mit der Federauflage 32 bzw. 34 verbunden, während weitere Federbefestigungen 45 den Anschluß an die jeweiligen Rollkörper 30 bzw. 31 bewirken.

An die Stelle der in den Fig. 3 und 4 dargestellten Schraubenfedern 33, 35 könnten gleichwertig andere Federn, etwa Blattfedern analog Fig. 1 bzw. 2 oder mäanderförmiger Drahtfedern treten. In diesem Falle könnten an den Federauflagen 32, 34 die Rillen 38, 39 ebenso wie an den Rollkörpern 30, 31 entfallen.

Die einzelnen Rollkörper 30, 31 des Gesamtsystems sind um eine gemeinsame Achse 43 drehbar. Damit wird erzielt, daß sich die einzelnen Tilgermassen gegenseitig abstützen und führen. Gemäß Fig. 4 durchsetzt ein durch Schrauben 41 gehaltener Bolzen 40 mittig die einzelnen Rollkörper 30, 31. Zur Verringerung der Reibung und gleichzeitig der Abnutzung können die Bohrungen zur Aufnahme des Bolzens 40 mit je einer Buchse 42 versehen sein.

Damit die einzelnen Rollkörper 30, 31 des Systems unabhängig von Temperatur- und Umwelteinflüssen über lange Zeiträume hinweg die beabsichtigten Schwingbewegungen ungehemmt ausführen können, bilden zumindest die Rollkörper 30, 31 samt den vorgekrümmten Schraubenfedern 33,5 mit ihren Befestigungen 44, 45, Federauflagen 32, 34 bzw. Rollbahnen und mit den jeweiligen, als harte Anschläge dienenden steifen Platten 29 eine vorgefertigte Baugruppe, die - am Deckel 11 hängend - nach Beigabe einer feuchtigkeits- und witterungsbeständigen Dichtung von oben in das Gehäuse 1 eingehängt und mit diesem, etwa mittels Schrauben, verbunden ist.

**Patentansprüche**

1. Stoß-Schwingungstilger zum Tilgen tieffrequenter Transversal-Schwingungen schlanker Strukturen (7), insbesondere von Hochspannungsfreileitungen, mit
- einem über Klemmen (6, 18) an der zu schützenden Struktur (7) befestigten Gehäuse (1),
- mindestens einer im Gehäuse (1) schwingfähig gelagerten Tilgermasse (2)
- deren Schwingweg im Gehäuse (1) durch harte Anschläge (5) begrenzt ist und - die durch mindestens eine Feder in einer Ausgangsposition vorzugsweise etwa mittig zwischen den Anschlägen (5) gehalten ist,
<u>dadurch gekennzeichnet</u>, daß die Tilgermasse (2)
- als mindestens ein in vertikaler Richtung geführt abwälzbarer Rollkörper (19; 30, 31) ausgebildet ist und

- durch eine vorgekrümmte, mit ihrem oberen Ende am Gehäuse (1) und mit ihrem unteren Ende am Rollkörper (19; 30, 31) befestigte sowie an einer geraden Federauflage (22; 32, 34) abwälzbare Biegefeder (Blattfeder 21, Schraubenfeder 33, 35) gehalten ist.

2. Schwingungstilger nach Anspruch 1, <u>dadurch gekennzeichnet</u>, daß der Rollkörper (19) über Stützrollen (20) gegenüber dem Gehäuse (1) im wesentlichen geradlinig geführt ist.

3. Schwingungstilger nach Anspruch 1, <u>dadurch gekennzeichnet</u>, daß die Tilgermasse (2) aufgeteilt und aus mindestens zwei gegensinnig laufenden Rollkörpern (30, 31) besteht.

4. Schwingungstilger nach Anspruch 3, <u>dadurch gekennzeichnet</u>, daß die Rollkörper (30, 31) um eine gemeinsame Achse (43) drehbar sind.

5. Schwingungstilger nach einem der vorgenannten Ansprüche <u>dadurch gekennzeichnet</u>, daß die beim Abrollen der Tilgermasse (2) aufbiegbare Biegefeder (Flachfeder 21; Schraubenfeder 33, 35) gegen eine Federauflage (22; 32, 34) anlegbar ist.

6. Schwingungstilger nach Anspruch 3 und/oder 4 und 5, <u>dadurch gekennzeichnet</u>, daß die Federauflage (32; 34) des einen Rollkörpers (30, 31) zugleich die Rollbahn des anderen Rollkörper-Systemes bildet.

7. Schwingungstilger nach Anspruch 6, <u>dadurch gekennzeichnet</u>, daß die Rollkörper (30, 31) und die Federauflagen (32, 34) einander zugekehrte, im Querschnitt jeweils etwa halbkreisförmige Rillen (38, 39) aufweisen, die als Führungsrillen die Biegefedern (Schraubenfedern 33, 35) aufnehmen.

8. Schwingungstilger nach einem der vorgenannten Ansprüche, <u>dadurch gekennzeichnet</u>, daß der obere und der untere harte Anschlag (5) als je ein quer zur Schwingrichtung jedes Rollkörpers (19; 30, 31) liegender, steifer Steg (29) ausgebildet ist.

9. Schwingungstilger nach einem der vorgenannten Ansprüche, <u>dadurch gekennzeichnet</u>, daß die vorgekrümmte Biegefeder als Blattfeder (21) ausgebildet ist.

10. Schwingungstilger nach einem der Ansprüche 1 bis 8, <u>dadurch gekennzeichnet</u>, daß die vorgekrümmte Biegefeder als mäanderförmige Flachfeder ausgebildet ist.

11. Schwingungstilger nach einem der Ansprüche 1 bis 8, <u>dadurch gekennzeichnet</u>, daß die vorgekrümmte Biegefeder als Schraubenfeder (33, 35) ausgebildet ist.

12. Schwingungstilger nach einem der vorgenannten Ansprüche, <u>dadurch gekennzeichnet</u>, daß die Rollkörper (19; 30, 31) mit exzentrisch zur Mittelachse liegendem Schwerpunkt (37) gestaltet sind.

13. Schwingungstilger nach Anspruch 12,
dadurch gekennzeichnet, daß jeder Rollkörper
(19; 30, 31) mindestens eine exzentrisch liegende
Bohrung (36) aufweist.

14. Schwingungstilger nach einem der
vorgenannten Ansprüche,
dadurch gekennzeichnet, daß zur Justierung
der Mittellage des/der Rollkörper (19; 30, 31)
bzw. zur Veränderung der Tilgercharakteristik
Zusatzfedern (23) zwischen Gehäuse (1) und dem
(den) Rollkörper(n) (19; 30, 31) angeordnet sind.

15. Schwingungstilger nach einem der
vorgenannten Ansprüche,
dadurch gekennzeichnet, daß die Rollkörper
(19; 30, 31) samt vorgekrümmten Federn (21; 33,
35) mit ihren Befestigungen (44, 45),
Führungsbahnen und Federauflagen (22; 32, 34)
einschließlich harten Anschlägen (5, 29) in einer
Baugruppe zusammengefaßt sind und daß diese
Baugruppe in dem röhrenförmigen, mit einem
fest angebrachten Deckel (10) und einem
abnehmbaren Deckel (11) versehenen Gehäuse
(1) befestigt ist.

## Claims

1. A shock vibrations absorber for the
absorption of low frequency transverse vibrations
of slim structures (7), overhead high voltage
transmission lines in particular, with
- a housing (1) to be fixed by means of clamps
(6, 18) to the structure (7) to be protected
- at least one absorber mass (2) mounted with
scope for oscillation in the housing (1)
whose oscillation path in the housing (1) is
limited by hard stops (5) and which is held by at
least one spring in an initial position, preferably
approximately centrally between the stops (5),
characterised in that
the absorber mass (2)
is designed as at least one rolling body (19; 30,
31) led in the vertical direction with scope for
rolling off and
is held by a pre-bent bending spring (leaf
spring 21, helical spring 33, 35) which is fixed at
its upper end on the housing (1) and at its lower
end on the rolling body (19; 30, 31), as well as
being capable of unrolling on a straight spring
bearing surface (22; 32, 34).

2. A vibrations absorber according to Claim 1,
characterised in that
the rolling body (19) is led via supporting
rollers (20) substantially rectilinearly relative to
the housing (1).

3. A vibrations absorber according to Claim 1,
characterised in that
the absorber mass (2) [is] subdivided and
consists of at least two rolling bodies (30; 31)
rolling in opposite directions.

4. A vibrations absorber according to Claim 3,
characterised in that
the rolling bodies (30; 31) are rotatable around
a common axis (43).

5. A vibrations absorber according to one of
the preceding Claims,
characterised in that
the bending spring (flat spring 21, helical
spring 33, 35) capable of unbending as the
absorber mass (2) rolls off, can bear against a
spring bearing surface (22; 32, 34).

6. A vibrations absorber according to Claim 3
and/or 4 and 5,
characterised in that
the spring bearing surface (32, 34) of the one
rolling body (30, 31) simultaneously forms the
raceway of the other rolling body system.

7. A vibrations absorber according to Claim 6,
characterised in that
the rolling bodies (30, 31) and the spring
bearing surfaces (32, 34) have grooves (38, 39)
facing each other, each approximately
semicircular in cross section which, as guide
grooves, accommodate the bending springs
(helical springs 33, 35).

8. A vibrations absorber according to one of
the preceding Claims,
characterised in that
the upper and lower hard stop (5) is designed
as a rigid bar (29) lying transversely to the direct
ion of oscillation of each rolling body (19; 30,31).

9. A vibrations absorber according to one of
the preceding Claims,
characterised in that
the pre-bent bending spring is designed as a
leaf spring (21).

10. A vibrations absorber according to one of
Claims 1 to 8,
characterised in that
the pre-bent bending spring is designed as a
meander shaped flat spring.

11. A vibrations absorber according to one of
Claims 1 to 8,
characterised in that
the pre-bent bending spring is designed as a
helical spring (33, 35).

12. A vibrations absorber according to one of
the preceding Claims,
characterised in that
the rolling bodies (19; 30, 31) are formed with
their centre of gravity (37) lying eccentrically to
the central axis.

13. A vibrations absorber according to Claim 12,
characterised in that
each rolling body (19; 30, 31) has at least one
eccentrically located bore (36).

14. A vibrations absorber according to one of
the preceding Claims,
characterised in that
additional springs (23) are arranged between
the housing (1) and the rolling body (or bodies)
(19; 30,31) for the adjustment of the central
position of the rolling body (or bodies) (19; 30,
31), or for the modification of the absorption
characteristic.

15. A vibrations absorber according to one of
the preceding Claims,
characterised in that

the rolling bodies (19; 30, 31) are grouped, together with the pre-bent springs (21; 33, 35), their mountings (44, 45), guide-ways and spring bearing surfaces (22; 32, 34), including the hard stops (5, 29) in one assembly, and that this assembly is mounted in the tubular housing (1) provided with a fixedly attached cover (10) and a detachable lid (11).

**Revendications**

1. Amortisseur de choc pour l'amortissement d'oscillations transversales de basse fréquence sur structures allongées (7), en particulier des lignes aériennes à haute tension, avec

-un boîtier (1) fixé par des mâchoires (6, 18) sur la structure (7) à protéger,

-au moins une masse d'amortissement (2) logée dans le boîtier (1) de manière à pouvoir osciller

- dont la course d'oscillation dans le boîtier (1) est limitée par des butées fixes (5) et - qui est maintenue dans une position de départ de préférence en position centrale entre les butées (5), par au moins un ressort,

caractérisé en ce que

la masse oscillante (2)

-est formée d'au moins un corps de roulement (19, 30, 31) guidé en direction verticale et

-est maintenue par un ressort pliant précourbé (ressort à lame 21, ressort cylindrique 33, 35) fixé par son extrémité supérieure au boîtier (1) et par son extrémité inférieure au corps de roulement (19, 30, 31), et pouvant se déplier sur un support de ressort rectiligne (22, 32, 34).

2. Amortisseur d'oscillations selon la revendication 1, caractérisé en ce que le corps de roulement (19) est essentiellement guidé dans une direction rectiligne par rapport au boîtier (1) par des galets-supports (20).

3. Amortisseur d'oscillations selon la revendication 1, caractérisé en ce que la masse d'amortissement (2) est divisée et se compose d'au moins deux corps de roulement (30, 31) se déplaçant en sens opposé.

4. Amortisseur d'oscillations selon la revendication 3, caractérisé en ce que les corps de roulement (30, 31) tournent autour d'un axe commun (43).

5. Amortisseur d'oscillations selon l'une des revendications précédentes, caractérisé en ce que, lors du roulement de la masse oscillante (2), le ressort pliant (ressort à lame 21, ressort cylindrique 33, 35) peut venir s'appuyer sur un support de ressort (22, 32, 34).

6. Amortisseur d'oscillations selon la revendication 3 et/ou 4 et 5, caractérisé en ce que le support de ressort (32, 34) de l'un des corps de roulement (30, 31) forme en même temps la voie de roulement de l'autre système de corps de roulement.

7. Amortisseur d'oscillations selon la revendication 6, caractérisé en ce que les corps de roulement (30, 31) et les supports de ressort (32, 34) présentent des rainures dirigées les unes vers les autres, presentant chacune une section transversale à peu près semi-circulaire (38, 39) qui servent de rainures de guidage aux ressorts pliants (ressorts cylindriques 33, 35).

8. Amortisseur d'oscillations selon l'une des revendications précédentes, caractérisé en ce que les butées fixes supérieure et inférieure (5) forment une nervure rigide (29) placée transversalement au plan d'oscillation des corps de roulement (19, 30, 31).

9. Amortisseur d'oscillations selon l'une des revendications précédentes, caractérisé en ce que le ressort pliant précourbé est configuré en ressort à lame (21).

10. Amortisseur d'oscillations selon l'une des revendications 1 à 8, caractérisé en ce que le ressort pliant précourbé est configuré en forme de ressort plat sinueux.

11. Amortisseur d'oscillations selon l'une des revendications 1 à 8, caractérisé en ce que le ressort pliant précourbé est configuré en ressort cylindrique (33, 35).

12. Amortisseur d'oscillations selon l'une des revendications précédentes, caractérisé en ce que les corps de roulement (19, 30, 31) ont leur centre de gravité (37) excentré par rapport à l'axe central.

13. Amortisseur d'oscillations selon la revendication 12, caractérisé en ce que chacun des corps de roulement (19, 30, 31) présente au moins un alésage excentrique (36).

14. Amortisseur d'oscillations selon l'une des revendications précédentes, caractérisé en ce que des ressorts supplémentaires (23) sont placés entre le boîtier (1) et le/les corps de roulement pour le réglage de la position moyenne du/des corps de roulement (19, 30, 31) ou pour modifier les caractéristiques d'amortissement.

15. Amortisseur d'oscillations selon l'une des revendications précédentes, caractérisé en ce que les corps de roulement (19, 30, 31), ainsi que les ressorts précourbés (21, 33, 35) avec leurs fixations (44, 45), guidages et supports de ressort (22, 32, 34), y compris les butées fixes (5, 29) sont réunis en un module et en ce que ce module est fixé dans le boîtier cylindrique (1) muni d'un couvercle fixe (10) et d'un couvercle amovible (11).

FIG. 1

FIG. 2

0 062 154

FIG. 3

FIG. 4